# EUROPEAN PATENT APPLICATION

(11) **EP 2 067 412 A1**
(43) Date of publication of application: **10.06.2009**
(21) Application number: 08170360.5
(22) Date of filing: 01.12.2008
(51) Int. Cl.: A23N 7/00, A23N 12/04, A23B 7/06

(54) **Machine for preparing vegetable products for peeling by blanching**

(30) Priority: 07.12.2007 IT PR20070094
(71) Applicant: CFT S.p.A., 43100 Parma (IT)
(72) Inventor: Catelli, Roberto, 43100 Parma (IT); Oppici, Silvano, 43015 Noceto (Parma) (IT); Lazzari, Alessio, 46019 - Salina di Viadana (Mantova) (IT); Montani, Roberto, 29016 - Cortemaggiore (Piacenza) (IT)
(74) Representative: Leone, Mario

(57) **Abstract**

The invention concerns a machine (10) for preparing vegetable products for peeling by blanching, which consists of an outer casing (21) having a horizontal axis (AA), with a plurality of concentric wheels (13, 14) moving therein, each carrying at its periphery successive holders (17) for the product (15) to be treated.

Upon rotation of the concentric wheels, the product (15) cyclically passes through the hot or overheated water contained in the casing (21), from the outermost wheel (14) to the innermost wheel (13), wherefrom it exits in a "blanched" state, ready for subsequent processing.

## Description

The present invention relates to a machine for preparing vegetable products, particularly tomatoes, for peeling by blanching.

In prior art, atmospheric pressure "blanchers" are known, which have an inclined rotor, rotating in a casing that is partially filled with hot water or overheated steam so that the product, placed in successive compartments over the periphery of the rotor, is urged to traverse the heated water during rotation and be thus blanched at its surface.

One example of this prior art is disclosed in Italian patent No, 01269374, which describes a blanching machine having a rotor with an axis inclined to the horizontal plane, which consists of a plurality of series of axially successive radial vanes, within a chamber delimited by the outer casing and axially defined by a pair of transverse baffles having an opening for transferring the product to the next series of vanes.

The prior art essentially has two main drawbacks:
- the first drawback is of technical nature: it is associated with the construction of inclined rotors, which involve a higher construction complexity, with axial and radial forces exerted on bearing points, whereas the machine of the present invention, as described and claimed hereinafter, has a horizontal axis, allowing for simple construction;
- the second drawback concerns performance: the above machine, having successive and inclined vanes, involves a loss of peeling capacity, due to poor water dipping in the first series of vanes.

The object of the present invention is to obviate the above drawbacks, by providing a machine for preparing vegetable products, particularly tomatoes, for peeling by blanching, which has improved performance as compared with prior art.

Particularly, this is achieved by providing a machine having a plurality of concentric wheels with rotating holders, in which the product is moved from the outermost wheel to the innermost wheel simply by gravity, once the product, rotated by an outer wheel finds a break in the circular baffle that divides it from the inner wheel.

During both rotations, the product traverses an overheated water bath, in which it is blanched.

Since the product moves along concentric wheels, the dipping path is longer than in prior art.

This occurs because the product traverses, during both rotations, a larger amount of (overheated) water than in the above mentioned cases.

The invention achieves the following advantages:
- increased "blanching" effectiveness;
- simpler machine construction, due to the horizontal orientation of the shaft with which the rotating part is integrated.

These objects and advantages are achieved by the machine of this invention, adapted to prepare vegetable products for peeling by blanching, which is characterized as defined in the annexed claims.

This and other features will be more apparent from the following description of a few embodiments, which are shown by way of example and without limitation in the accompanying drawings. In particular:
- Figure 1 is a central sectional view of a machine for preparing vegetable products to peeling by blanching, according to the present invention;
- Figure 2 is another (lateral) view of the same machine.

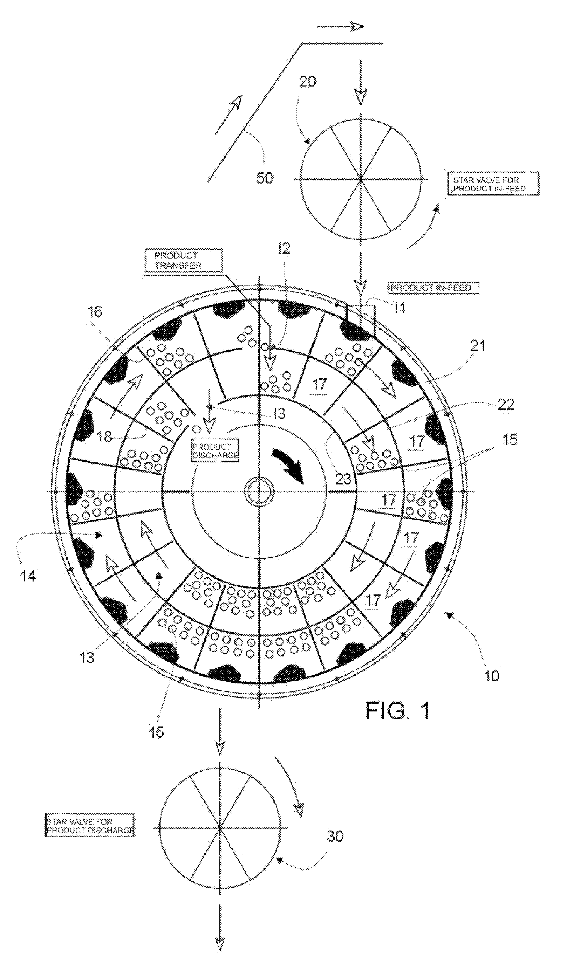

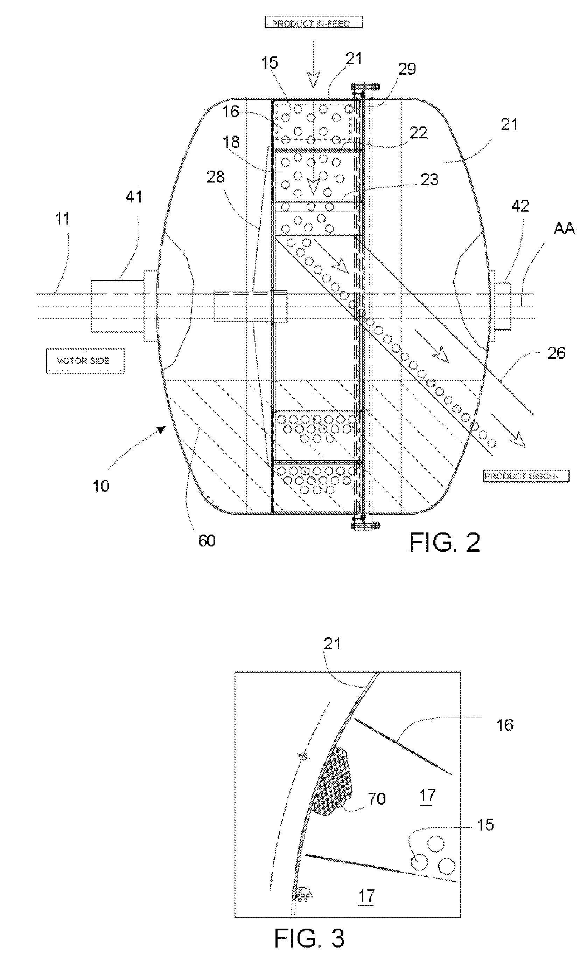

Referring to Figures 1 and 2, numeral 10 generally designates a machine for preparing vegetable products to peeling by blanching.

This machine 10 comprises an outer casing 21, in which a series of concentric wheels, generally designated by numerals 13 and 14, rotate and delimit in turn a plurality of holders 17 for the product 15 to be treated.

Namely, these holders 17 are defined by:
- a series of radial vanes 16 and 18, each for each concentric wheel 13 and 14,
- concentric walls 21, 22 and 23, the wall 21 simply being the above mentioned outer casing,
- two lateral disks 28 and 29 for containing the vanes 16, 18 and the concentric walls 22, 23.

The radial vanes 16 and 18 are integral with the disk 28 which is in turn keyed to a shaft 11 to be rotated therewith, whereas the walls 22, 23 are integral with the opposite wall 29, which is in turn secured to the outer casing 21, and hence are stationary.

The shaft 11 passes through the outer casing 21 and the corresponding series of concentric wheels 13 and 14, and fits into corresponding supports 41 and 42, such as bearings, which are also equipped with seal means for preventing any leakage of the liquid contained in the casing 21.

The shaft 11 has a substantially horizontal orientation.

The vegetable product to be treated, designated by numeral 15, is introduced through a star valve feeder 20, and discharged through another star valve 30, located at the bottom.

A conveyor / elevator 50 conveys the product 15 into the inlet star valve 20, whereas an appropriate chute 26, connected with a corresponding opening I3 of the last wheel 13 has the purpose of moving the product away from the machine 10.

The product 15 enters the first outermost wheel 14 through the opening I1 and comes into its holder 17; upon rotation of the radial walls, the holder 17 is passed a first time through a mass of hot and/or overheated water 60 contained in said casing (21), the remaining part thereof being filled with saturated vapor.

As this rotation continues, the product 15 encounters a next opening I2, consisting of a break of the center wall 22 and moves by gravity into the holder 17 of the concentric inner wall 14, where it runs one more turn through the mass of hot water 60.

Finally, the product 15 encounters the outlet I3, wherefrom it is discharged by gravity.

The disks 28 and 29 will obviously have appropriate holes 70, as shown also in Figure 3, to allow water to come into and out of the chambers 17.

While reference has been made herein to a blanching machine 10 with two concentric wheels, two or more passages may be provided for the product, without departure from the inventive scope.

The mass of hot water 60 in the casing 21 may be controlled to be as high as the discharge level of the outlet I3.

With the holders 17 in star arrangement, over multiple concentric rows, "blanching" effectiveness is increased.

Also, the horizontal orientation of the machine - i.e. of the rotating shaft 11 - reduces the forces exerted on the bearings and simplifies construction.

## Claims

1. A machine (10) for preparing vegetable products for peeling by blanching, **characterized in that** it comprises an outer casing (21) having a horizontal axis (AA), with a plurality of concentric wheels (13, 14) therein, which carry a plurality of holders (17) for the product (15) to be treated, said product (15) being cyclically passed through the hot and/or overheated water contained in said casing (21), the remaining part thereof being filled with saturated vapor, from the outermost wheel (14) to the innermost wheel (13), and comes out of said innermost wheel (13) through an aperture (I3), in a "blanched" state, ready for subsequent processing.

2. A machine (10) as claimed in claim 1, **characterized in that** said holders (17) are defined by:
a. a series of radial vanes (16, 18), each for each concentric wheel (13, 14),
b. concentric walls (21), (22) and (23), the wall (21) being the wall of the outer casing,
c. two lateral disks (28) and (29) for containing the vanes (16, 18) and the concentric walls (22, 23),
said radial vanes (16, 18) being integral with the rotating disk (28), whereas the concentric walls (22, 23) are integral with the opposite wall (29), which is in turn secured to the outer casing (21), and hence are stationary.

3. A machine (10) as claimed in claim 2, **characterized in that** said disk (28) is keyed to a shaft (11) to be rotated therewith, said shaft (11) defining the axis of rotation (AA) of the machine.

4. A machine (10) as claimed in claim 2, **characterized in that** said shaft (11) passes through the outer casing (21) and the corresponding series of concentric wheels (13, 14), and fits into corresponding supports (41, 42), which are equipped with seal means for preventing any leakage of the liquid contained in the casing (21).

5. A machine (10) as claimed in claim 2, **characterized in that** said shaft (11) has a horizontal orientation.

6. A machine (10) as claimed in claim 1, **characterized in that** said first outermost wheel (14) has an inlet (I1) for the product (15), situated at the top of the outer casing (21) for the product to enter the holders (17) and an opening (I2), consisting of a break of the central or partition wall (11), through which the product (15) falls by gravity into the corresponding holder (17) of the wheel (13) with an axis concentric with the previous one and integral therewith.

7. A machine (10) as claimed in claim 1, **characterized in that** said innermost wheel (13) has an outlet (I3) from which the product (15) is discharged by gravity.

8. A machine (10) as claimed in claim 2, **characterized in that** said holders (17) are delimited at their sides by perforated disks (28, 29) allowing water to come into and out of the holders (17).

9. A machine (10) as claimed in claim 1, **characterized in that** the mass of hot water in the casing (21) may be adjusted to reach the maximum discharge level of the outlet (I3).

10. A machine (10) as claimed in claim 1, **characterized in that** two of said concentric wheels (13, 14) are provided.
